# EUROPÄISCHE PATENTSCHRIFT

(11) **EP 0 779 423 B1**
(45) Veröffentlichungstag und Bekanntmachung des Hinweises auf die Patenterteilung: **20.06.2001**
(21) Anmeldenummer: 96118011.4
(22) Anmeldetag: 09.11.1996
(51) Int. Cl.: F28C 3/06

(54) **Quench-Kühler**
Quench cooler
Refroidisseur à trempe

(30) Priorität: 14.12.1995 DE 19546725
(43) Veröffentlichungstag der Anmeldung: 18.06.1997
(73) Patentinhaber: ASEA BROWN BOVERI AG, 5400 Baden (CH)
(72) Erfinder: Illbruck, Holger, 79761 Waldshut-Tiengen (DE)
(74) Vertreter: Klein, Ernest

(56) Entgegenhaltungen:
- EP-A- 0 647 462
- DE-U- 8 900 464
- GB-A- 1 360 628
- US-A- 2 838 135
- US-A- 3 920 774
- US-A- 5 027 750
- PATENT ABSTRACTS OF JAPAN vol. 009, no. 011 (M-351), 18. Januar 1985 -& JP 59 160032 A (KOGYO GIJUTSUIN;OTHERS: 0J), 10. September 1984

## Beschreibung

### Technisches Gebiet

Die Erfindung betrifft einen Quench-Kühler zum Kühlen eines heissen strömenden Gases, im wesentlichen bestehend aus einem zylindrischen Mantel, welcher über einen Gas-Einstrittsstutzen mit einer Heissgasleitung und über einen Gas-Austrittsstutzen mit einer Kaltgasleitung verbunden ist, und welcher Mittel zum Einspritzen von Wasser aufweist. Sie betrifft auch die Verwendung eines solchen Quench-Kühlers in einer offenen Gasturbinenanlage.

### Stand der Technik

Gasturbinen der modernen Generation und der oberen Leistungsklasse arbeiten mit sehr hohen Turbinen-Eintrittstemperaturen, was eine Kühlung der Brennkammer, der Rotoren und der Beschaufelung unumgänglich macht. Hierfür wird in der Regel hochverdichtete Luft am Verdichteraustritt abgezogen. Da ein sehr hoher Anteil der verdichteten Luft für die heutige übliche Vormischverbrennung gebraucht wird, verbleibt einerseits für Kühlzwecke nur ein Minimum an Kühlluft. Anderseits ist diese für die Kühlung bestimmte Luft infolge der Verdichtung bereits sehr heiss, weshalb sich deren vorgängige Kühlung empfiehlt.

Es bietet sich in der Folge an, das Rückkühlen mittels an sich bekannter Wassereinspritzung ("gas-guenching") vorzunehmen; mit dieser Methode wird zwar die hochwertige Wärme der Kühlluft, deren Anteil bei den heutigen Maschinen bis zu 20 MW betragen kann, nur teilweise aussgenutzt. Jedoch ergeben sich mit dieser Lösung eine Anzahl schwergewichtiger Vorteile gegenüber den auch möglichen Konvektionskühlern, die auf der Basis von Luft/luft- oder Flüssigkeits/Luft-Wärmeaustausch arbeiten.

Ein Quench-Kühler zur Kühlung heisser strömender Gase ist beispielsweise aus EP 0 647 462 A1 bekannt. Dieser Kühler besteht aus einem zylindrischen Mantel, welcher über einen Gaseinstrittsstutzen mit einer Heissgasleitung und über einen Gasaustrittsstutzen mit einer Kaltgasleitung verbunden ist und welcher Mittel zum Einspritzen von Wasser und stromab eine Füllung zum Durchmischen der beiden Phasen aufweist. Das mittels einer Pumpe über Düsen eingespritzte Wasser bildet relativ grosse Tropfen aus, wodurch der Wärmekontakt relativ gering ist und hauptsächlich auf den Bereich der nachfolgenden Füllung beschränkt bleibt.

### Darstellung der Erfindung

Die Erfindung liegt deshalb die Aufgabe zugrunde, einen Quench-Kühler mit hohem Nutzungsgrad für hohe Gas-und Flüssigkeitstemperaturen und hohe Drücke zu schaffen. Die spezielle thermohydraulische Anforderung an diese Klasse von Apparaten, sofern sie in modernen Gasturbinenanlagen zur Anwendung gelangen, ist dabei folgende: hohe Gaseintrittstemperatur zwischen 300-530°C, hoher Druck auf der Gasseite zwischen 20 und 35 bar, geringe gas- und flüssigkeitseitige Druckverluste und relativ hohe Kühlspanne des Gases grösser als 250°C.

Erfindungsgemäss wird diese Aufgabe dadurch gelöst, dass die Wassereinspritzmittel Druckzerstäuberdüsen sind, welche mit Wasser und Wasserdampf beaufschlagt sind und der für die Zerstäubung des Wassers benötigte Wasserdampf in einem Verdampfer erzeugt wird, welcher in der Heissgasleitung selbst angeordnet ist. Der Vorteil dieser Massnahme ist insbesondere darin zu sehen, dass auf die separate Bereitstellung der üblicherweise verwendeten Zerstäuberluft verzichtet werden kann.

### Kurze Beschreibung der Zeichnung

In der Zeichnung ist ein Ausführungsbeispiel der Erfindung anhand einer Gasturbinenanlage schematisch dargestellt. Es sind nur die für das Verständnis der Erfindung wesentlichen Elemente gezeigt. Die Strömungsrichtung der Arbeitsmedien ist mit Pfeilen bezeichnet.

Es zeigen:
- Fig. 1: Ein vereinfachtes Anlagenschema
- Fig. 2: einen Schnitt durch einen Quench-Kühler mit Einspritz- und Überwachungssystem.

### Weg zur Ausführung der Erfindung

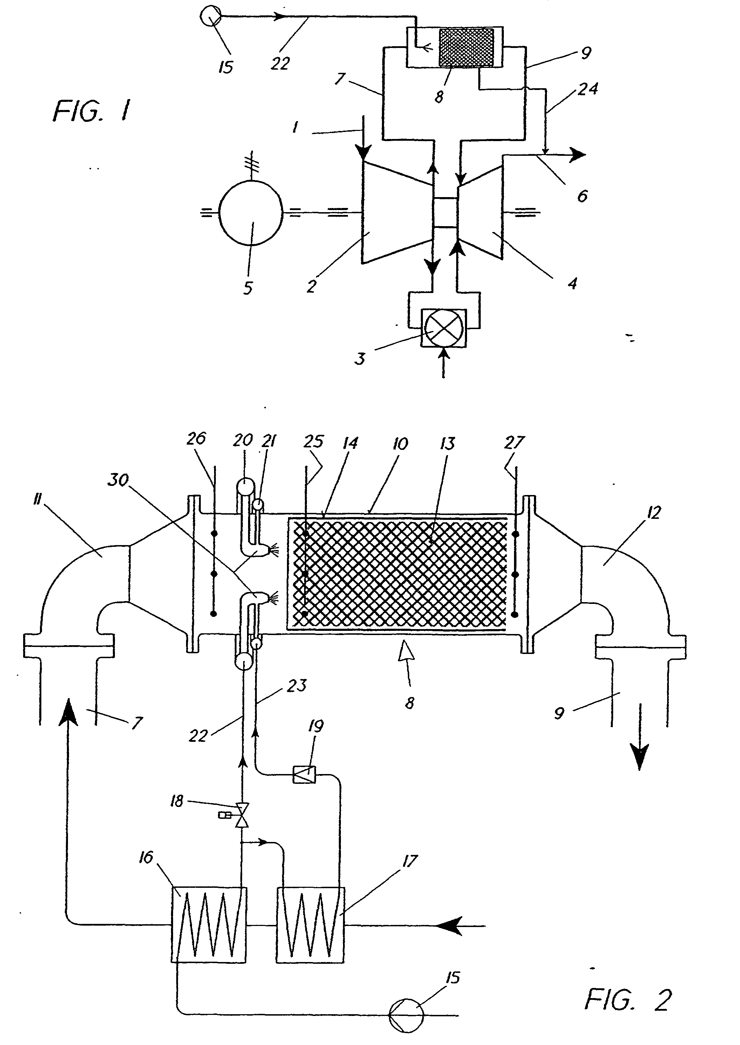

Gemäss Figur. 1 wird im Gasturbinenkreislauf bei 1 atmosphärisch angesaugte Frischluft in einem Verdichter 2 auf den Arbeitsdruck verdichtet. Die verdichtete Luft wird in einer beispielsweise mit Erdgas befeuerten Brennkammer 3 stark erhitzt; das so entstandene Brenngas wird in einer Gasturbine 4 arbeitsleistend entspannt. Die dabei gewonnene Energie wird an einen Generator 5 bzw. den Verdichter 2 abgegeben. Die Abgase aus der Gasturbine werden über die Abgasleitung 6 und einen nicht dargestellten Kamin ins Freie geleitet.

Für die zu Kühlzwecken gebrauchte Luft zweigt vom Austritt des Verdichters 2 eine Luftleitung 7 zu einem Quench-Kühler 8 ab. Nach dessen Durchströmung gelangt die abgekühlte Luft über eine Kühlleitung 9 zu den verschiedenen Verbrauchern. Wasserseitig wird der Quench-kühler über die Leitung 22 mit einer Wasserpumpe 15 angespeist.

Dieser Quench-kühler 8 ist anhand der Fig. 2 näher erläutert: Über die Heissgasleitung 7 - hier die Luftleitung aus dem Verdichter - gelangt das zu kühlende Medium in den Apparat. Im wesentlichen besteht der Apparat aus dem Gas-Eintrittsstutzen 11, welcher einerseits an der Luftleitung 7 angeflanscht ist und anderseits über einen Flansch mit dem zylindrischen Mantel 10 verbunden ist. Austrittseitig ist dieser Mantel 10 wiederum über einen Flansch mit dem Gas-Austrittsstutzen 12 verbunden, welcher auch an der Kaltgasleitung 9 - hier der Kühlleitung - angeflanscht ist.

Am Manteleintritt sind über den kreisfömigen Querschnitt verteilt die Wassereinspritzmittel angeordnet. Hierbei handelt es sich um eine Mehrzahl von Druckzerstäuberdüsen 30. Sie werden einerseits aus einer den Apparat umgebenden Ringkammer 20 mit Wasser angespeist, andererseits mit Dampf aus einer den Apparat umgebenden Ringkammer 21. Der Dampf dient der Zerstäubung des Wassers, wobei am Düsenaustritt Tröpchen in Micron-Grösse erzielt werden.

Die Dampfaufbereitung für die Wasserzerstäubung in den Wassereinspritzmitteln 30 geschieht zweckmässigerweise in der Heissgasleitung, hier also in der Luftleitung 7, die vom Verdichter zum Quench-Kühler 8 führt. Über die Wasserpumpe 15 gelangt das Arbeitsmittel zunächst in einen Wasservorwärmer 16. Von hier aus wird der überwiegende Teil des Wassers über die Wasserleitung 22 zur Ringkammer 20 geleitet. In dieser Wasserleitung 22 ist ein Regelventil 18 angeordnet. Am Austritt des Vorwärmers wird ein Teil des Wassers abgezweigt und in den Wasserverdampfer 17 geführt. In der Heissgasleitung ist dieser Wasserverdampfer luftseitig dem Vorwärmer vorgeschaltet. Aus dem Verdampfer gelangt der erzeugte Dampf über eine Dampfleitung 23, in der ein Druckhalteventil 19 angeordnet ist, in die Ringkammer 21.

Stromabwärts der Druckzerstäuberdüsen 30 ist der durchströmte kreisfömige Querschnitt des Mantels 10 mit einem statischen Mischer in Form einer Füllkörperkolonne 13 versehen. Eine solche zylindrische Kolonne 13 enthält geschichtete Füllkörper, nachstehend Packung genannt. Dabei kann es sich um eine Schüttung handeln, also um eine sogenannte ungeordnete Füllung (random packing). Besser geeignet ist eine geordnete Füllung (regular packing), welche die Vorzüge einer höheren Mischleistung bei geringerem Druckabfall durch homogen gezielte Verteilung bietet. Als Material für solche an sich bekannten Packungen kann Edelstahl oder Keramik verwendet werden, die sich alle durch eine gute Benetzbarkeit bei wässrigen Systemen auszeichnen.

Das eingespritzte Wasser und die Luft durchströmen die mehreren Schichten der regulären Packung im Gleichstrom. In der Packung findet eine vollständige Durchmischung der zwei Phasen statt, wobei der Wasseranteil verdampft. Die heisse Luft liefert dabei die Verdampfungsenthalpie, so dass eine isenthalpe Absenkung der Lufttemperatur im Apparat erfolgt.

Anhand eines Zahlenbeispiels sei dies näher erläutert: Es versteht sich, dass im Zusammenhang mit den genannten Zahlenwerten hinsichtlich der Dimensionierung des Apparates und insbesondere der erforderlichen Packungslänge auf die Angabe von Absolutwerten verzichtet werden muss, da diese Werte aufgrund ihrer Abhängigkeit von allzu zahlreichen Parametern ohnehin zu wenig aussagekräftig sind. Massgebend für die Auslegung ist einzig, dass eine vollständige Verdampfung des eingespritzten stattfindet.

Der Eintrittszustand der zu kühlenden Luft betrage ca.34 bar und ca. 500°C; die Luftmenge betrage ca. 35 kg/sec. Die eingespritzte Wassermenge beträgt ca. 10 kg/s. Über den Luft-Austrittsstutzen 12 verlässt das Arbeitsmittel den Apparat dann als Kühlluft mit einer Temperatur von ca. 170°C. Im vorliegenden Fall wird die Luft demnach um 330°C heruntergekühlt.

Ein solcher Apparat zeichnet sich durch eine kompakte Bauweise aus und arbeitet ohne nennenswerte Druckverluste. Die Kompaktheit und die nur erforderlichen kurzen Leitungen gestatten das Aufstellen des Quench-Kühlers in unmittelbarer Maschinennähe, so dass er mit Vorteil in die Schallisolierung des thermischen Blockes miteinbezogen werden kann.

Aufgrund der Quench-Kühlung wird die Leistung der Gasturbine dadurch erhöht, dass der die Gasturbine beaufschlagende Massenstrom zumindest teilweise um den verdampften Wasseranteil erhöht wird; Nach Verrichtung seiner Kühlfunktion wird das Kühlmittel nämlich zur Arbeitsleistung in der Gasturbinenbeschaufelung weiterverwendet.

Die Packung ist in der Kolonne in einer eigenen Ummantelung 14 in Form eines dünnen Bleches gehalten und damit als in den zylindrischen Mantel 10 einschiebbare Patrone ausgebildet. Dies hat den Vorteil, dass sich Verdampfungsrückstände nicht auf dem eigentlichen Apparatemantel 10 absetzen können. Beim Ausbau der Kolonne anlässlich der Wartung verbleiben die eine Schicht bildenden Verdampfungsrückstände somit innerhalb der Patrone. Die Gefahr des Abbrechens von Partikeln von der Mantelwand 10 und deren möglicher Transport in die zu kühlenden Verbraucher ist damit eliminiert.

Ein in den heissen Teil der Gasturbine führender Kühlluftstrom darf keine Wassertropfen enthalten, da diese beim Auftreffen auf die heissen Teile zu Beschädigungen führen können. Falls Wasser im Kühlluftstrom festgestellt wird, muss die Maschine abgestellt werden. Wasser-Detektionsmittel für die vorliegenden hohen Druck- und Temperaturverhältnissse in modernen Gasturbinen sind derzeit auf dem Markt nicht erhältlich. Abhilfe schafft hier eine Temperaturmessung im statischen Mischer selbst, wozu eine Mehrzahl von entsprechend geschalteten Thermoelementen 25 im Innern der Packung angeordnet sind. So wie Wasser auf die Wandungen der Füllkörper aufprallt, sinkt deren Temperatur schnell. Wenn der Wasserfluss gross genug ist, wird die Temperatur der Packung bis zur Nassdampftemperatur absinken. Eine solche Messung ist demnach geeignet, um in kürzester Zeit Wasser zu detektieren, welches auf die Füllkörper auftrifft.

Eine weitere Methode, um die Präsenz von Wasser sowie dessen Verdampfung in der Kolonne zu überprüfen, besteht in einer Temmperaturmessung stromaufwärts und stromabwärts des statischen Mischers. Hierzu werden entsprechende Thermolelemente 26 und 27 auf geeignete Art durch den Mantel 10 geführt und im durchströmten Querschnitt angemessen verteilt. Das Feststellen einer Temperaturdifferenz zwischen Eintritt und Austritt des Mischers weist auf eine ordnungsgemässe Verdampfung hin.

Allfällig im Quench-Kühler anfallendes Kondensat wird über eine Drainageleitung 24 in die zum Kamin führende Abgasleitung 6 eingeleitet. Mit dieser Massnahme kann auf die üblichen Flash-Boxes verzichtet werden, in welchen das unter Druck stehende Kondensat auf Atmosphärendruck entspannt und durch Mischung mit Kaltwaser heruntergekühlt wird.

### Bezugszeichenliste

- 1: Verdichtereintritt
- 2: Verdichter
- 3: Brennkammer
- 4: Gasturbine
- 5: Generator
- 6: Abgasleitung
- 7: Heissgasleitung
- 8: Quench-Kühler
- 9: Kaltgasleitung
- 10: Mantel von 8
- 11: Gas-Eintrittsstutzen
- 12: Gas-Austrittsstutzen
- 13: Füllkörperkolonne
- 14: Mantel von 13
- 15: Wasserpumpe
- 16: Wasservorwärmer
- 17: Wasserverdampfer
- 18: Regelventil
- 19: Druckhalteventil
- 20: Ringkammer für Wasser
- 21: Ringkammer für Dampf
- 22: Wasserleitung zu 20
- 23: Dampfleitung zu 21
- 24: Drainageleitung zu 6
- 25: Thermoelemente
- 26: Thermoelemente
- 27: Thermoelemente
- 30: Wassereinspritzmittel, Druckzerstäuberdüsen

## Patentansprüche

1. Quench-Kühler zum Kühlen eines heissen strömenden Gases, im wesentlichen bestehend aus einem zylindrischen Mantel (10), welcher über einen Gas-Einstrittsstutzen (11) mit einer Heissgasleitung (7) und über einen Gas-Austrittsstutzen (12) mit einer Kaltgasleitung (9) verbunden ist, und welcher Mittel (30) zum Einspritzen von Wasser aufweist,
dadurch gekennzeichnet,
dass die Wassereinspritzmittel (30) Druckzerstäuberdüsen sind, welche mit Wasser und Wasserdampf beaufschlagt sind, wobei der Wasserdampf in einem Verdampfer (17) erzeugt wird, welcher in der Heissgasleitung (7) angeordnet ist.

2. Quench-Kühler nach Anspruch 1, dadurch gekennzeichnet, dass stromabwärts der Wassereinspritzmittel (30) eine den durchströmten Querschnitt des Mantels (10) ausfüllende Füllkörperkolonne (13) angeordnet ist.

3. Quench-Kühler nach Anspruch 2, dadurch gekennzeichnet, dass die Füllkörperkolonne (13) als in den zylindrischen Mantel (10) einschiebbare Patrone mit eigener Ummantelung (14) ausgebildet ist.

4. Quench-Kühler nach Anspruch 2, dadurch gekennzeichnet, dass stromaufwärts und stromabwärts der Füllkörperkolonne (13) Thermolelemente (26, 27) im durchströmten Mantelquerschnitt angeordnet sind.

5. Quench-Kühler nach Anspruch 2, dadurch gekennzeichnet, dass die Füllkörperkolonne (13) mit Thermo elementen (25) versehen ist.

6. Verwendung eines Quench-Kühlers nach Anspruch 1 oder Anspruch 5 in einem Gasturbinenprozess, wobei der Gas-Eintrittsstutzen (11) mit dem Austritt eines Gasturbinen-Verdichters (2) und der Gas-Austrittsstutzen (12) mit einer zur Gasturbine (4) führenden Kühlluftleitung (9) verbunden ist, und wobei im Quench-Kühler (8) anfallendes Kondensat über eine Drainageleitung (24) in eine zu einem Kamin führende Abgasleitung (6) eingeleitet wird.

## Claims

1. Quench cooler for cooling a hot flowing gas, essentially comprising a cylindrical shell (10) which is connected via a gas-inlet connection piece (11) to a hot-gas line (7) and via a gas-outlet connection piece (12) to a cold-gas line (9) and which has means (30) for injecting water, characterized in that the water-injection means (30) are pressure-atomization nozzles to which water and steam are admitted, the steam being generated in an evaporator (17) which is arranged in the hot-gas line (7).

2. Quench cooler according to Claim 1, characterized in that a packed column (13) filling the cross-section of the shell (10) through which flow occurs is arranged downstream of the water-injection means (30).

3. Quench cooler according to Claim 2, characterized in that the packed column (13) is designed as a cartridge which can be pushed into the cylindrical shell (10) and has a separate casing (14).

4. Quench cooler according to Claim 2, characterized in that thermocouples (26, 27) are arranged upstream of and downstream of the packed column (13) in the shell cross-section through which flow occurs.

5. Quench cooler according to Claim 2, characterized in that the packed column (13) is provided with thermocouples (25).

6. Use of a quench cooler according to Claim 1 or 5 in a gas-turbine process, the gas-inlet connection piece (11) being connected to the outlet of gas-turbine compressor (2) and the gas-outlet connection piece (12) being connected to a cooling-air line (9) leading to the gas turbine (4), and condensate which collects in the quench cooler (8) being directed via a drainage line (24) into an exhaust-gas line (6) leading to a flue.

## Revendications

1. Refroidisseur à injection pour le refroidissement d'un gaz chaud en circulation, se composant essentiellement d'une enceinte cylindrique (10), qui est raccordée à une conduite de gaz chaud (7) par une tubulure d'entrée de gaz (11) et à une conduite de gaz froid (9) par une tubulure de sortie de gaz (12), et qui présente des moyens (30) pour injecter de l'eau, caractérisé en ce que les moyens d'injection d'eau (30) sont des injecteurs à haute pression, qui sont alimentés en eau et en vapeur d'eau, dans lequel la vapeur d'eau est produite dans un évaporateur (17), qui est disposé dans la conduite de gaz chaud (7).

2. Refroidisseur à injection suivant la revendication 1, caractérisé en ce qu'une colonne de corps de remplissage (13) remplissant la section transversale traversée de l'enceinte (10) est disposée en aval des moyens d'injection d'eau (30).

3. Refroidisseur à injection suivant la revendication 2, caractérisé en ce que la colonne de corps de remplissage (13) a la forme d'une cartouche avec une enveloppe propre (14) à insérer dans l'enceinte cylindrique (10).

4. Refroidisseur à injection suivant la revendication 2, caractérisé en ce que des thermocouples (26, 27) sont disposés dans la section transversale traversée de l'enveloppe en amont et en aval de la colonne de corps de remplissage (13).

5. Refroidisseur à injection suivant la revendication 2, caractérisé en ce que la colonne de corps de remplissage (13) est pourvue de thermocouples (25).

6. Utilisation d'un refroidisseur à injection suivant la revendication 1 ou la revendication 5 dans un processus de turbine à gaz, dans laquelle la tubulure d'entrée de gaz (11) est raccordée à la sortie d'un compresseur (2) de turbine à gaz et la tubulure de sortie de gaz (12) à une conduite d'air de refroidissement (9) menant à la turbine à gaz (4), et dans laquelle le condensat se déposant dans le refroidisseur à injection (8) est introduit par une conduite de drainage (24) dans une conduite de gaz d'échappement (6) menant à une cheminée.
